# EUROPEAN PATENT SPECIFICATION

(11) **EP 2 188 793 B1**
(45) Date of publication and mention of the grant of the patent: **31.01.2018**
(21) Application number: 08796613.1
(22) Date of filing: 25.07.2008
(51) Int. Cl.: G08B 23/00, B60T 7/14

(54) **COGNITIVE ALERTER**
KOGNITIVE HINWEISVORRICHTUNG
ALERTEUR COGNITIF

(30) Priority: 28.08.2007 US 846156
(43) Date of publication of application: 26.05.2010
(73) Proprietor: Siemens Industry, Inc., Alpharetta, GA 30005 (US)
(72) Inventor: KANE, Mark, Orange Park, Florida 32073 (US); SHOCKLEY, James, Orange Park, Florida 32073 (US)
(74) Representative: Maier, Daniel Oliver
(86) International application number: PCT/US2008/071143
(87) International publication number: WO 2009/032420

(56) References cited:
- KR-B1- 100 742 112
- US-A- 4 234 051
- US-A- 5 012 226
- US-A- 5 392 030
- US-A- 6 042 201
- US-B1- 6 371 575

## Description

### BACKGROUND

Ensuring that an operator of a train remains alert while operating the train continues to be an important issue in the railroad industry. This is true for all trains, including those that are operated manually and those that involve some form of collision avoidance or positive train control.

In response to the need for ensuring that a train operator remains alert, a number of systems have been developed or proposed. Such systems are sometimes referred to in the art as alerters, and are sometimes stand-alone systems and at other times are integrated into positive train control or collision avoidance systems. These systems typically require the operator to take some action (e.g., push a button, flip a switch, etc.) in response to some stimulus (e.g., a bell, an image on a screen, etc.) at various times and, if the action is not taken, stop the train by engaging the brakes and/or putting the locomotive into neutral.

Some known problems are that the systems do not adequately ensure that an operator is alert. For example, one type of train control system known in the art as the cab signal system only requires an operator to acknowledge an audible alarm signal by pressing a button. As discussed in U.S. Patent No. 6,903,658, it is known that operators can successfully acknowledge audible signals by pushing a button while in a semi-conscious state referred to as "micro-sleep." Micro-sleep typically occurs when an operator has successfully brought the train into balance (i.e., the train has accelerated to a desired speed and the throttle is in a desired notch, the brake pipe pressure is correctly set, and other controls on the train are in their desired positions) and the operator has nothing to do other than stay alert.

Another problem with some known systems concerns the timing of the operator stimulus. For example, U.S. Patent No. 5,392,030 to Adams describes a system in which an operator is required to key in a sequence of alphanumeric characters that is displayed on a screen at random times. Requiring the operator to respond to the alerter system at random time intervals (or at fixed time intervals) raises the possibility that the operator will be asked for a response during a time period in which the operator is actively controlling the train and is therefore alert. Asking the operator to respond to an alerter system while he is actively controlling the train is not necessary and therefore unnecessarily annoying because the operator is alert at such times, and is also undesirable because it draws the operator's attention away from the operation of the train at a time when he or she would otherwise be operating one of the controls on the train.

### BRIEF DESCRIPTION OF THE DRAWINGS

Fig. 1 is a block diagram of an alerter system according to an embodiment of the invention.
Fig. 2 is a flowchart of the operation of the alerter system of Fig. 1.

### DETAILED DESCRIPTION

In the following detailed description, a plurality of specific details, such as time periods and types of sequences displayed to a train operator, are set forth in order to provide a thorough understanding of the preferred embodiments discussed below. The details discussed in connection with the preferred embodiments should not be understood to limit the present invention. Furthermore, for ease of understanding, certain method steps are delineated as separate steps; however, these steps should not be construed as necessarily distinct nor order dependent in their performance.

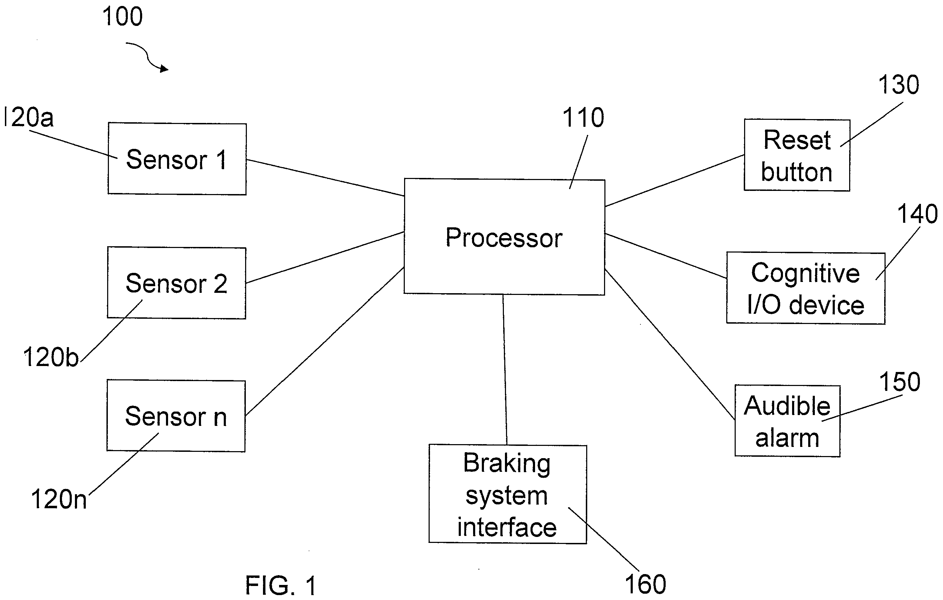

A train control system 100 is illustrated in Fig. 1. It should be understood that the system 100 may be a standalone system or may be integrated into another system such as a train control system (e.g., a cab signal system, a positive train control system, etc.). The system 100 includes a processor 110. The processor 110 may be a microprocessor or microcontroller, or may be implemented using discrete logic components or any other method known in the art.

Connected to the processor 110 are a plurality of sensors 120a-n. The sensors 120a-n are configured to detect operation of a locomotive control, which may be electrical, mechanical or pneumatic, by the operator. The sensors 120a-n may include components that are incorporated into such controls. For example, a sensor for monitoring operator movement of a locomotive throttle may be realized by connecting a control signal corresponding to the throttle position that is used by the propulsion system to control the train's electric motors to the processor 110. In such a case, the sensor would include the electrical connection between the processor and the control signal as well as the components of the throttle assembly that translate movement of the throttle handle to the electrical signal that is input to the processor 110. Alternatively, a sensor for the throttle handle may include additional components (e.g., a potentiometer that is physically connected to the throttle handle) in addition to those provided with the throttle assembly to generate a signal based on a position of the throttle handle. Any type of components may be used as sensors 120a-n so long as such components provide a reliable indication that the operator is taking some action to operate the train.

Also connected to the processor 110 is a braking system interface 160. The braking system interface 160 is used to control the brakes of the train. In some embodiments, the braking system interface 160 is an electrically controlled switch that can disrupt power to a P2A valve in a braking system. As is well known in the art, disrupting the power to a P2A valve will result in a penalty brake application that will bring the train to a halt. Other, more sophisticated braking system interfaces that provide for more robust braking system control (e.g., interfaces that provide the ability to slow a train rather than stop it) may also be used in some embodiments.

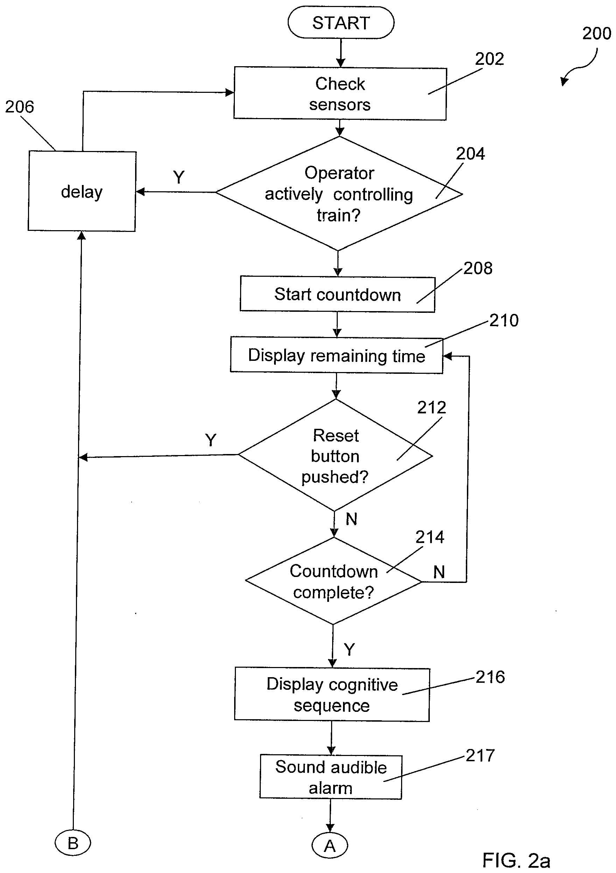

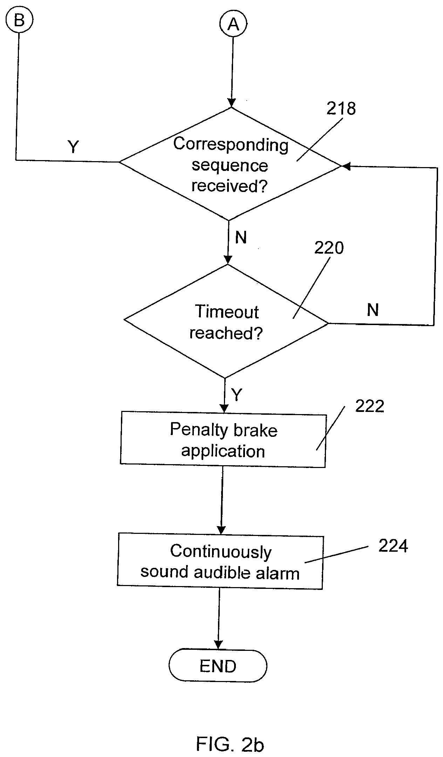

A reset button 130, cognitive I/O device 140, and audible alarm 150 are also connected to the processor 110. These devices may be integrated into a single housing along with the processor 110 and braking system interface 160, or may be physically separate devices. The reset button 130 is preferably of the momentary contact type and may be used by the operator to reset a countdown period as will be explained in further detail in connection wit Fig. 2.

The cognitive I/O device 140 is a device which is capable of displaying a sequence to an operator and accepting a corresponding sequence from the operator. For example, the cognitive I/O device may consist of a simple alphanumeric display (e.g., an LCD or LED display) that is used to display an alphanumeric sequence to an operator, and a keypad that can be used by the operator to enter a corresponding sequence. In other embodiments, other kinds of devices for displaying other kinds of sequences, such as a touchscreen for displaying button sequences such as those described in U.S. Patent No. 6,903,658, the content of which is incorporated herein. It should be understood that a corresponding sequence may be a matching sequence but is not so limited and may be a reverse sequence (i.e., if 1234 is displayed, 4321 is entered by the operator) or an otherwise-related sequence in some embodiments. Such sequences may be desirable as they require a higher degree of alertness than that required to repeat a sequence.

The audible alarm 150 may be a bell, buzzer, speaker, or any other device capable of creating an audible sound. The audible alarm 150 may also include an air horn as is typically found on a locomotive.

Operation of the system 100 in one embodiment is illustrated in the flowchart 200 of Fig. 2. The processor 110 checks the various sensors 120a-n at step 202. If the sensors indicate that the operator has moved any of the train controls associated with the sensors at step 204 (indicating that the operator is actively controlling the train), then the processor delays for a brief period of time at step 206 and step 202 is repeated. The precise manner in which the sensors make this indication will vary depending upon the type of sensor. For example, determining whether the operator has operated the throttle requires storage of the setting of the throttle at a time prior to step 202 with which the current setting of the throttle at step 202 can be compared. In contrast, a sensor connected to monitor the operation of a control with a momentary contact such as an air horn will require something akin to a latch that will register a momentary activation until such time as step 202 is performed. The period of time for the delay 206 may be fixed or random. In some embodiments, the period of time for the delay 206 depends on the train's speed. For example, in one embodiment, the period of time in seconds is determined by dividing 2400 by the speed of the train in miles per hour (e.g., 2400 seconds / 60 mph = 40 seconds), such that the delay period decreases as the train's speed increases. In other embodiments, the period of the delay is on the order of a few minutes, but longer or shorter periods are used in yet other embodiments.

If the operator is not actively controlling the train at step 204 (signifying that the operator is not currently actively controlling the train, as would be the case when the train was in balance), the operator is given a fixed period of time in which he or she can manually reset the alerter by simply pressing the reset button 130. In some embodiments, this fixed period of time is ten seconds, but longer or shorter periods may be used in other embodiments. The processor 110 starts a countdown of the fixed time period at step 208 and displays the remaining time in the time period (or, in alternative embodiments, the time elapsed since the start of the time period, leaving it to the operator to recognize how much time is left) on the cognitive I/O device 140 (or on a separate display associated with the reset button or another device) at step 210. This visual time display is preferably the only notice that the operator is given - there is no audible alarm because an operator may successfully press the reset button 130 while in a state of micro-sleep as discussed above. Rather, the visual-only display of the time, at a minimum, requires the operator's eyes to be open and on the time display. This increases the likelihood that the operator is alert. If the operator presses the reset button 130 at step 212, step 206 and the delay associated therewith is repeated. Otherwise, if the countdown is not complete at step 214, step 212 is repeated until the countdown is complete or until the operator presses the reset button 130.

If the countdown ends at step 214 before the operator presses the reset button 130, there is a danger that the operator may not be fully alert. Therefore, the operator is required to perform a task that requires cognitive ability on the part of the operator within a predetermined time period. At step 216, a sequence is displayed on the cognitive I/O device 140 and an audible alarm is sounded at step 217. The audible alarm is used at this point because it is desirable for the operator to be awakened, and the requirement to enter a corresponding sequence ensures that the operator is alert if a correct corresponding sequence is entered by the operator. If a corresponding sequence is received from the operator at step 218, step 206 is repeated.

If the operator fails to enter a corresponding sequence at step 218 prior to expiration of the timeout, it is assumed that the operator is not alert or is otherwise incapacitated and therefore continued movement of the train is unsafe. Accordingly, the processor 110 initiates a penalty brake application at step 222 to stop the train and continuously sounds the audible alarm at step 224. Those of skill in the art will recognize that other brake applications (e.g., an emergency brake application, a full service brake application, or a more gradual brake application, may be used in place of the penalty brake application of step 222. Processing is then complete and the operator is required to perform a manual reset of the system in order to get the train moving again. This ensures that the operator is fully awake before the train moves.

In some embodiments, the events from the cognitive alerter are transmitted to an event recorder. In this way, a record of the operator's alertness is maintained in the same way that other actions taken by the operator are recorded.

In some embodiments, no manual reset button 130 is provided and steps 208-214 of Figs. 2a and 2b are not performed. Thus, the operator is forced to enter a corresponding sequence each time his alertness is tested. Such embodiments provide greater assurance that the operator is alert, but suffer from the drawback of requiring more action by the operator. This increases operator annoyance and provides increased motivation for the operator to tamper with or disable the system 100.

In some embodiments, the cognitive alerter system is disabled when the train's speed is below a threshold. In some embodiments, the threshold is 3 mph. In such embodiments, the operator will not be presented with any sequences or otherwise have his alertness tested when the train is traveling 3 mph or less. This is because an operator is normally paying attention and alert when traveling so slowly.

It will be apparent to those of skill in the art that numerous variations in addition to those discussed above are also possible.

Furthermore, the purpose of the Abstract is to enable the U.S. Patent and Trademark Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the present invention in any way.

## Claims

1. A computerized method for ensuring that an operator remains alert during operation of a train comprising the steps of:
(a) monitoring at least one train control device to determine whether the operator is operating the train control device; **characterized in that**
(b) if the operator has not operated the train control device within a first time period, only visually displaying to the operator an indication that a third time period has started, and if the operator has pressed a reset button during the third time period, repeating step (a); and if the operator has not pressed the reset button before lapse of the third time period, displaying at least one sequence to an operator on a display device and sounding an audible alarm at a start of a second time period;
(c) determining whether the operator has entered a corresponding sequence within the second time period; and
(d) stopping the train if the operator fails to enter the corresponding sequence within the second time period.

2. The method of claim 1, wherein the first time period is fixed.

3. The method of claim 1, wherein the first time period is randomly chosen.

4. The method of claim 1, further comprising the step of sounding an audible alarm if the operator fails to enter the corresponding sequence within the second time period.

5. The method of claim 1, wherein the train is stopped with a penalty brake application.

6. The method of claim 1, wherein steps (b), (c) and (d) are skipped when a speed of the train is less than a predetermined threshold.

7. A system for ensuring that an operator remains alert during operation of a train, the system comprising:
a processor;
at least one sensor connected to the processor;
a display connected to the processor;
an input device connected to the processor; and
a brake interface connected to the processor;
wherein the processor is configured to perform the steps of
(a) monitoring the at least one sensor to determine whether the operator is operating the train control device; **characterized in that**
(b) if the operator has not operated the train control device within a first time period, only visually displaying to the operator an indication that a third time period has started, and if the operator has pressed a reset button during the third time period, repeating step (a); and if the operator has not pressed the reset button before lapse of the third time period, displaying at least one sequence to an operator on the display and sounding an audible alarm at a start of a second time period;
(c) determining whether the operator has entered on the input device a corresponding sequence within the second time period; and
(d) commanding the brake interface to stop the train if the operator fails to enter the corresponding sequence within the second time period.

8. The system of claim 7, further comprising the steps of:
setting a third time period;
displaying to the operator an indication that the third time period has started prior to displaying the at least one sequence to the operator; and
if the operator has pressed a reset button during the third time period, repeating step (a).

9. The system of claim 7, wherein the first time period is fixed.

10. The system of claim 7, wherein the first time period is randomly chosen.

11. The system of claim 7, further comprising the step of sounding an audible alarm if the operator fails to enter the corresponding sequence within the second time period.

12. The system of claim 7, wherein steps (b), (c) and (d) are skipped when a speed of the train is less than a predetermined threshold.

## Patentansprüche

1. Computergestütztes Verfahren zum Sicherstellen, dass ein Triebfahrzeugführer während des Betriebs eines Zuges wach bleibt, die folgenden Schritte umfassend:
(a) Überwachen wenigstens einer Zugsteuereinrichtung, um zu bestimmen, ob der Triebfahrzeugführer die Zugsteuereinrichtung bedient;
**dadurch gekennzeichnet, dass**
(b) falls der Triebfahrzeugführer die Zugsteuereinrichtung innerhalb eines ersten Zeitintervalls nicht bedient hat, nur optisches Anzeigen eines Hinweises für den Triebfahrzeugführer, dass ein drittes Zeitintervall begonnen hat, und falls der Triebfahrzeugführer während des dritten Zeitintervalls eine Rückstelltaste gedrückt hat, Wiederholen von Schritt (a); und falls der Triebfahrzeugführer die Rückstelltaste vor Ablauf des dritten Zeitintervalls nicht gedrückt hat, Anzeigen wenigstens einer Sequenz für einen Triebfahrzeugführer auf einer Anzeigevorrichtung und Ertönenlassen eines akustischen Alarms an einem Anfang eines zweiten Zeitintervalls;
(c) Bestimmen, ob der Triebfahrzeugführer eine entsprechende Sequenz innerhalb des zweiten Zeitintervalls eingegeben hat; und
(d) Stoppen des Zuges, falls der Triebfahrzeugführer es versäumt, die entsprechende Sequenz innerhalb des zweiten Zeitintervalls einzugeben.

2. Verfahren nach Anspruch 1, wobei das erste Zeitintervall fest ist.

3. Verfahren nach Anspruch 1, wobei das erste Zeitintervall zufällig gewählt wird.

4. Verfahren nach Anspruch 1, welches ferner den Schritt des Ertönenlassens eines akustischen Alarms umfasst, falls der Triebfahrzeugführer es versäumt, die entsprechende Sequenz innerhalb des zweiten Zeitintervalls einzugeben.

5. Verfahren nach Anspruch 1, wobei der Zug mit einem Notbremsvorgang gebremst wird.

6. Verfahren nach Anspruch 1, wobei die Schritte (b), (c) und (d) weggelassen werden, wenn eine Geschwindigkeit des Zuges geringer als ein vorbestimmter Schwellenwert ist.

7. System zum Sicherstellen, dass ein Triebfahrzeugführer während des Betriebs eines Zuges wach bleibt, wobei das System umfasst:
einen Prozessor;
wenigstens einen Sensor, der mit dem Prozessor verbunden ist;
eine Anzeigevorrichtung, die mit dem Prozessor verbunden ist;
eine Eingabevorrichtung, die mit dem Prozessor verbunden ist;
eine Bremsschnittstelle, die mit dem Prozessor verbunden ist;
wobei der Prozessor dafür konfiguriert ist, die folgenden Schritte auszuführen:
(a) Überwachen des wenigstens einen Sensors, um zu bestimmen, ob der Triebfahrzeugführer die Zugsteuereinrichtung bedient;
**dadurch gekennzeichnet, dass**
(b) falls der Triebfahrzeugführer die Zugsteuereinrichtung innerhalb eines ersten Zeitintervalls nicht bedient hat, nur optisches Anzeigen eines Hinweises für den Triebfahrzeugführer, dass ein drittes Zeitintervall begonnen hat, und falls der Triebfahrzeugführer während des dritten Zeitintervalls eine Rückstelltaste gedrückt hat, Wiederholen von Schritt (a); und falls der Triebfahrzeugführer die Rückstelltaste vor Ablauf des dritten Zeitintervalls nicht gedrückt hat, Anzeigen wenigstens einer Sequenz für einen Triebfahrzeugführer auf der Anzeigevorrichtung und Ertönenlassen eines akustischen Alarms an einem Anfang eines zweiten Zeitintervalls;
(c) Bestimmen, ob der Triebfahrzeugführer eine entsprechende Sequenz innerhalb des zweiten Zeitintervalls auf der Eingabevorrichtung eingegeben hat; und
(d) Steuern der Bremsschnittstelle, um den Zug zu stoppen, falls der Triebfahrzeugführer es versäumt, die entsprechende Sequenz innerhalb des zweiten Zeitintervalls einzugeben.

8. System nach Anspruch 7, ferner die folgenden Schritte umfassend:
Einstellen eines dritten Zeitintervalls;
Anzeigen eines Hinweises für den Triebfahrzeugführer, dass das dritte Zeitintervall begonnen hat, vor dem Anzeigen wenigstens einer Sequenz für den Triebfahrzeugführer; und
falls der Triebfahrzeugführer während des dritten Zeitintervalls eine Rückstelltaste gedrückt hat, Wiederholen von Schritt (a).

9. System nach Anspruch 7, wobei das erste Zeitintervall fest ist.

10. System nach Anspruch 7, wobei das erste Zeitintervall zufällig gewählt ist.

11. System nach Anspruch 7, welches ferner den Schritt des Ertönenlassens eines akustischen Alarms umfasst, falls der Triebfahrzeugführer es versäumt, die entsprechende Sequenz innerhalb des zweiten Zeitintervalls einzugeben.

12. System nach Anspruch 7, wobei die Schritte (b), (c) und (d) weggelassen werden, wenn eine Geschwindigkeit des Zuges geringer als ein vorbestimmter Schwellenwert ist.

## Revendications

1. Procédé informatisé destiné à garantir qu'un conducteur reste vigilant pendant la conduite d'un train comprenant les étapes consistant :
(a) à surveiller au moins un dispositif de commande de train pour déterminer si le conducteur manipule le dispositif de commande de train ;
**caractérisé en ce que** :
(b) si le conducteur n'a pas manipulé le dispositif de commande de train pendant un premier intervalle de temps, on présente uniquement visuellement au conducteur une indication disant qu'un troisième intervalle de temps a débuté, et si le conducteur a pressé un bouton de remise à zéro pendant le troisième intervalle de temps, on répète l'étape (a), et si le conducteur n'a pas pressé le bouton de remise à zéro avant l'écoulement du troisième intervalle de temps, on présente au moins une séquence à un conducteur sur un dispositif d'affichage et on fait retentir une alarme sonore au début d'un deuxième intervalle de temps ;
(c) on détermine si le conducteur a entré une séquence correspondante pendant le deuxième intervalle de temps ; et
(d) on arrête le train si le conducteur omet d'entrer la séquence correspondante pendant le deuxième intervalle de temps.

2. Procédé selon la revendication 1, dans lequel le premier intervalle de temps est fixe.

3. Procédé selon la revendication 1, dans lequel le premier intervalle de temps est choisi au hasard.

4. Procédé selon la revendication 1, comprenant par ailleurs l'étape consistant à faire retentir une alarme sonore si le conducteur n'entre pas la séquence correspondante pendant le deuxième intervalle de temps.

5. Procédé selon la revendication 1, dans lequel le train est arrêté au moyen d'un freinage de contrôle.

6. Procédé selon la revendication 1, dans lequel les étapes (b), (c) et (d) sont omises lorsqu'une vitesse du train est inférieure à un seuil prédéterminé.

7. Système destiné à garantir qu'un conducteur reste vigilant pendant la conduite d'un train, le système comprenant :
un processeur ;
au moins un capteur relié au processeur ;
un afficheur relié au processeur ;
un dispositif de saisie relié au processeur, et
une interface de freinage reliée au processeur,
étant entendu que le processeur est configuré pour exécuter les étapes consistant :
(a) à surveiller l'au moins un capteur pour déterminer si le conducteur manipule le dispositif de commande de train ;
**caractérisé en ce que** :
(b) si le conducteur n'a pas manipulé le dispositif de commande de train pendant un premier intervalle de temps, on présente uniquement visuellement au conducteur une indication disant qu'un troisième intervalle de temps a débuté, et si le conducteur a pressé un bouton de remise à zéro pendant le troisième intervalle de temps, on répète l'étape (a), et si le conducteur n'a pas pressé le bouton de remise à zéro avant l'écoulement du troisième intervalle de temps, on présente au moins une séquence à un conducteur sur l'affichage et on fait retentir une alarme sonore au début d'un deuxième intervalle de temps ;
(c) on détermine si le conducteur a entré sur le dispositif de saisie une séquence correspondante pendant le deuxième intervalle de temps ; et
(d) on commande à l'interface de freinage d'arrêter le train si le conducteur n'entre pas la séquence correspondante pendant le deuxième intervalle de temps.

8. Système selon la revendication 7, comprenant par ailleurs les étapes consistant :
à définir un troisième intervalle de temps ;
à présenter au conducteur une indication disant que le troisième intervalle de temps a débuté, avant de présenter l'au moins une séquence au conducteur ; et
si le conducteur a pressé un bouton de remise à zéro pendant le troisième intervalle de temps, à répéter l'étape (a).

9. Système selon la revendication 7, dans lequel le premier intervalle de temps est fixe.

10. Système selon la revendication 7, dans lequel le premier intervalle de temps est choisi au hasard.

11. Système selon la revendication 7, comprenant par ailleurs l'étape consistant à faire retentir une alarme sonore si le conducteur n'entre pas la séquence correspondante pendant le deuxième intervalle de temps.

12. Système selon la revendication 7, dans lequel les étapes (b), (c) et (d) sont omises lorsqu'une vitesse du train est inférieure à un seuil prédéterminé.
